# EUROPÄISCHE PATENTANMELDUNG

(11) **EP 2 154 377 A2**
(43) Veröffentlichungstag der Anmeldung: **17.02.2010**
(21) Anmeldenummer: 09010314.4
(22) Anmeldetag: 11.08.2009
(51) Int. Cl.: F04D 13/06, F04D 29/66

(54) **Geräuschminimierung eines Pumpenaggregats**

(30) Priorität: 12.08.2008 DE 102008038659
(71) Anmelder: WILO SE, 44263 Dortmund (DE)
(72) Erfinder: Materne, Thomas, 59348 Lüdingshausen (DE); Müller, Markus, 45770 Marl (DE)
(74) Vertreter: COHAUSZ DAWIDOWICZ HANNIG & SOZIEN

(57) **Zusammenfassung**

Die Erfindung betrifft ein Verfahren zur Geräuschreduzierung eines Pumpenaggregats umfassend eine Pumpe und einen diese antreibenden Elektromotor mit Statorwicklungen, wobei das Pumpenaggregat ein Schallsignal mit einem Frequenzspektrum abstrahlt, das bei zumindest einer Frequenz ein Intensitätsmaximum aufweist, und die Bestromung des Elektromotors von einer Elektronik gesteuert wird, und wobei der durch die Bestromung in den Statorwicklungen erzeugte Erregerstrom derart moduliert wird, dass ein vorbestimmter Sollwert einer Kenngröße des Erregerstroms um einen Zufallswert verändert wird.

## Beschreibung

Die Erfindung betrifft ein Verfahren zur Geräuschreduzierung eines Pumpenaggregats umfassend eine Pumpe und einen diese antreibenden Elektromotor mit Statorwicklungen, wobei das Pumpenaggregat ein Schallsignal mit einem Frequenzspektrum abstrahlt, das bei zumindest einer Frequenz ein Intensitätsmaximum aufweist, und wobei die Bestromung des Elektromotors von einer Elektronik gesteuert wird. Weiterhin betrifft die Erfindung ein Pumpenaggregat mit Mitteln zur Durchführung des Verfahrens.

Bei Pumpen, die mittels eines Elektromotors angetrieben werden, kann es im Betrieb zu Geräuschemissionen kommen, die durch mechanische, elektrische oder magnetische Unsymmetrien des Elektromotors und/ oder der Pumpe bedingt sind. Mechanische Unsymmetrien können beispielsweise aus einer Unwucht des Rotors oder Pumpenlaufrades, einer nicht idealen konzentrischen Lage zwischen Rotor und Stator aufgrund von Bauteiltoleranzen oder aufgrund von betriebsbedingten Verschleißerscheinungen der Lager resultieren. Wegen der Toleranzen der einzelnen Spulen, insbesondere bei deren Anordnung innerhalb des Stators und aufgrund geringfügig unterschiedlicher Spulenwicklungslängen, entstehen elektromagnetische Asymmetrien des Statorfeldes. Weiterhin können bei der Verwendung von Rotoren mit Permanentmagneten magnetische Asymmetrien des Rotorfeldes entstehen, die durch ein unsymmetrisches magnetisches Feld der hergestellten Permanentmagnete bedingt sind.

Die durch diese mechanischen, magnetischen und/oder elektromagnetischen Asymmetrien erzeugten Kräfte wirken in axialer, radialer und ferner auch in tangentialer Richtung des Rotors und regen das Pumpenaggregat, d.h. den Elektromotor respektive die mit ihm mechanisch in Verbindung stehende Pumpe zu Eigenschwingungen bzw. mechanischen Vibrationen an. Diese Schwingungen erzeugen wiederum eine Schallabstrahlung in Form von Körper- Luftschall sowie Flüssigkeitsschall, der auf das geförderte hydraulische Medium übertragen wird und sich dadurch innerhalb des gesamten hydraulischen Systems verbreitet, in dem die elektromotorisch betriebene Pumpe integriert ist. Beide Schallarten werden als akustische Wellen von Personen in der näheren Umgebung der Pumpe respektive des hydraulischen Systems wahrgenommen und bilden störende Geräusche. Erreichen die Vibrationen Resonanzfrequenzen der mechanischen Konstruktion des Pumpenaggregates, können sogar Schäden an einzelnen Komponenten des Elektromotors oder der Pumpe entstehen. Die abgestrahlten Schallsignale weisen ein Frequenzspektrum auf, welches ein oder mehrere Intensitätsmaxima bei den Frequenzen der Eigenschwingungen bzw. Eigenfrequenzen der Bauteile besitzt. Die Eigenfrequenzen bilden tonale Anteile in dem betriebsbedingten Grundgeräusch des Pumpenaggregats, die für Personen im Betriebsumfeld des Aggregates als besonders störend empfunden werden.

Zur Verringerung oder gar Vermeidung von Vibrationen ist es bekannt, den mechanischen Aufbau des Pumpenaggregates durch konstruktive Maßnahmen zu optimieren. Hierzu dienen insbesondere mechanische Schwingungsdämpfer. Diese bedingen jedoch einen vergleichsweise komplexen Aufbau des Pumpenaggregates und erhöhen dessen Herstellungsaufwand erheblich.

Es ist daher Aufgabe der Erfindung, ein einfaches Verfahren bereitzustellen, welches die Geräuschemission bei elektromotorisch betriebenen Pumpen auf besonders einfache und preisgünstige Weise effektiv minimiert und gleichzeitig Verschleißerscheinungen an mechanischen Bauteilen des Elektromotors und/oder der Pumpe reduziert.

Diese Aufgabe wird durch das Verfahren mit den Merkmalen gemäß Anspruch 1 sowie mit dem Pumpenaggregat mit den Merkmalen des Anspruchs 13 gelöst.

Erfindungsgemäß ist dabei vorgesehen, dass zur Geräuschreduzierung eines Pumpenaggregats umfassend eine Pumpe und einen diese antreibenden Elektromotor mit Statorwicklungen der durch die Bestromung in den Statorwicklungen erzeugte Erregerstrom derart moduliert wird, dass ein vorbestimmter Sollwert einer Kenngröße des Erregerstroms verändert wird, der innerhalb eines vorgebbaren Bereichs um den Sollwert liegt. Die Modulation einer Kenngröße des Erregerstroms, die erfindungsgemäß die Phase, Frequenz oder Amplitude des Erregerstroms sein kann, derart, dass die Kenngröße in der Umgebung eines Sollwerts um einen stochastischen Wert verändert wird, bewirkt eine Beeinflussung der schallerzeugenden Quelle derart, dass ihr Frequenzspektrum moduliert wird, wobei die von dem Pumpenaggregat abgestrahlte Schallenergie von dem zumindest einen Intensitätsmaximum bei einer bestimmten Frequenz auf die Seitenbänder verteilt wird, so dass die Amplitude des Intensitätsmaximums vermindert wird. Dies hat wiederum zur Folge das der und/oder die tonalen Anteile in dem Betriebsgeräusch des Pumpenaggregates herausgefiltert werden, so dass die emittierten Geräusche als weniger störend empfunden werden. Durch die Verteilung der Schallenergie von der bzw. den Eigenfrequenzen auf die Seitenbänder, d. h. auf Frequenzen, die jenseits der Eigenfrequenzen oberhalb und unterhalb derselben liegen, wird die Amplitude des tonalen Anteils bzw. die Amplituden der tonalen Anteile entsprechend vermindert wobei sie quasi im Betriebsrauschen untergehen.

Durch die Veränderung einer Kenngröße des Erregerstroms um einen Zufallswert wird gewährleistet, dass jegliche Gesetzmäßigkeiten bei der Entstehung des Intensitätsmaximums ausgeschaltet werden, denen das Schallsignal gehorcht. Da diese Gesetzmäßigkeiten insbesondere darauf beruhen, dass die Schallerzeugenden Elemente in der Regel periodisch oder quasiperiodisch betätigte Bauteile des Elektromotors bzw. der Pumpe sind, beispielsweise die Drehung des Rotors bzw. die zyklische Bestromung der Statorspulen des Elektromotors, insbesondere mit einem Pulsmuster, kann der Anregung mechanischer Schwingungen, bedingt durch die gesetzmäßigen mechanischen, magnetischen oder elektromagnetischen Asymmetrien, durch einen stochastischen Wert, der einer Kenngröße des Erregerstroms zumindest einer, vorzugsweise jedoch aller Spulen hinzuaddiert oder subtrahiert wird, wirkungsvoll entgegengewirkt werden. Insbesondere ist das erfindungsgemäße Verfahren dadurch, dass es auf elektronischem Wege realisiert werden kann besonders einfach und preisgünstig herzustellen, und lässt sich ohne konstruktive Änderungen des Aggregats in bestehende Motorelektroniksteuerungen implementieren.

Vorzugsweise kann die Kenngröße die Phase des Erregerstroms sein, wobei in diesem Falle eine Phasenmodulation des Erregerstroms durchgeführt wird. Der Sollwert der Phase ist durch die Polpaarzahl festgelegt und richtet sich nach der relativen Winkels des Rotors zu einem zu bestromenden Wicklungsstrang.

Alternativ oder in Kombination kann als Kenngröße auch die Frequenz des Erregerstroms verwendet werden, wobei in diesem Fall eine Frequenzmodulation des Erregstroms durchgeführt wird. Der Sollwert der Frequenz entspricht hierbei der Winkelwindigkeit des Rotors, richtet sich folglich nach eine bestimmten vorgegebenen Drehzahl.

Weiterhin kann alternativ oder in Kombination mit den vorgenannten Möglichkeiten als Kenngröße auch die Amplitude des Erregerstroms gewählt werden, wobei in diesem Falle eine Amplitudenmodulation durchgeführt wird. Der Sollwert der Amplitude richtet sich nach der Lastsituation, d.h. nach dem aktuell benötigten Drehmoment, das von der magnetischen Statorfeldstärke und diese wiederum von den Spulenströmen abhängt.

Die Modulation kann für den Erregerstrom lediglich einer einzigen Spule, jedoch auch für zwei oder mehr, vorzugsweise jedoch für alle Spulen gleichzeitig erfolgen. Jede der genannten drei Modulationsarten hat zur Folge, dass durch die Veränderung des Sollwertes für die Phase, Frequenz und/oder Amplitude des Erregerstroms um einen zufälligen Phasenwert, Frequenzwert bzw. Amplitudenwert die in dem Intensitätsmaximum bei einer spezifischen Frequenz oder den Intensitätsmaxima bei verschiedenen spezifischen Frequenzen vorhandenen Energien auf die entsprechenden Seitenbänder der Frequenzen verteilt werden, so dass die tonalen Anteile in dem von dem Pumpenaggregat emittierten Schallsignal in dem Betriebsgrundgeräusch weitgehend untergehen.

Der Zufallswert kann zu dem Sollwert addiert oder subtrahiert werden. Diese einfache mathematische Operation hat den Vorteil, dass sie mit einfachen analogen oder digitalen Mitteln, vorzugsweise in einem Algorithmus, der in der Motorsteuerungselektronik implementiert ist, verwirklicht werden kann.

In einer vorteilhaften Weiterbildung der Erfindung erfolgt die Modulation des Erregerstroms nur dann, wenn das Intensitätsmaximum einen vorgebbaren Maximalwert erreicht oder überschreitet. Das Pumpenaggregat kann dadurch für den normalen Betriebsfall ohne Eingriff in die Motorsteuerung arbeiten, wobei das erfindungsgemäße Verfahren lediglich dann zugeschaltet wird, wenn sich beispielsweise aufgrund von Verschleißerscheinungen in dem abgestrahlten Schallsignal ein frequenzspezifischer Anteil bildet, der einen bestimmten Schallpegel erreicht, ab dem er als störend empfunden wird.

Da sich durch die Modulation des Erregerstroms der Rauschanteil in dem abgestrahlten Schallsignal erhöht, kann erfindungsgemäß vorgesehen werden, dass der Sollwert lediglich innerhalb eines vorgebbaren kleinen Bereichs um den Sollwert variiert wird. Beispielsweise kann der Bereich durch +/-10%, insbesondere durch +/-4% des Sollwertes gebildet sein. Der Sollwert variiert demgemäß zwischen 90% und 110% bzw. zwischen 96% und 104% der Sollwertvorgabe. Hierdurch wird gewährleistet, dass sich das Betriebsgrundrauschen nur geringfügig und damit unmerkbar erhöht.

Weiterhin ist vorteilhaft, wenn sich der Zufallswert ständig ändert. Insbesondere kann nach jedem oder jedem zweiten Bestromungszyklus ein anderer Zufallswert zu der Kenngröße oder mehreren Kenngrößen des Erregerstroms hinzuaddiert oder abgezogen werden. Hierdurch wird eine sukzessive stochastische Veränderung des Sollwerts innerhalb eines Toleranzbandes um den Sollwert und damit eine stochastische Modulation des Frequenzspektrums des abgestrahlten Schallsignals erreicht, da bei jeder Änderung des Sollwerts die Energie des Intensitätsmaximums unterschiedlich auf die Seitenbänder verteilt wird. Hierdurch werden die tonalen Anteile innerhalb des Frequenzspektrums quasi "verwaschen".

Erfindungsgemäß ist der Elektromotor des Pumpenaggregates ein mehrphasiger insbesondere dreiphasiger Elektromotor, dessen Erregerstrom jeder Phase unabhängig von den Erregerströmen der übrigen Phasen modelliert werden kann. Hierdurch wird ein größtmöglicher Freiheitsgrad und eine unabhängige Modulation der Erregerströme der das Statorfeld erzeugenden Spulen erreicht. Die Energieverteilung des Intensitätsmaximums auf die Seitenbänder wird dadurch noch effektiver und die Reduzierung des tonalen Anteils noch effektiver erreicht,

Vorzugsweise kann der Elektromotor ein elektronisch kommutierter Motor (EC-Motor) sein und die Elektronik eine Leistungselektronik und einen Mikrocontroller aufweisen, der die Leistungselektronik mit einem pulsweitenmodulierten Signal beaufschlagt. Der Mikrocontroller kann das pulsweitenmodulierte Signal in der Frequenz und/oder in der Phase derart modulieren, dass ein vorbestimmter Sollwert der Phase, Amplitude und/oder der Frequenz des Erregerstroms um den Zufallswert verändert wird. Bei der Verwendung eines EC-Motors ist die Realisierung des erfindungsgemäßen Verfahrens aufgrund der notwendigen Pulsweitenmodulation zur Steuerung des Elektromotors besonders einfach realisierbar und kann ohne Aufwand als Algorithmus in dem Mikrocontroller implementiert werden.

Besonders vorteilhaft ist es weiterhin, wenn die Pumpe eine Kreiselpumpe insbesondere eine Heizungspumpe ist, und das Pumpenaggregat in ein Heizungssystem integriert ist. Besonders in diesem Fall ist es notwendig, unangenehme Störgeräusche der Pumpenaggregate für ein angenehmes Wohlbefinden der die Heizungsanlage nutzenden Personen zu erreichen.

Weiterhin ist erfindungsgemäß ein Pumpenaggregat umfassend eine Pumpe und einen diese antreibenden Elektromotor mit Statorwicklungen vorgesehen, wobei das Pumpenaggregat im Betrieb ein Schallsignal mit einem Frequenzspektrum abstrahlt, das bei zumindest einer Frequenz ein Intensitätsmaximum aufweist, die Bestromung des Elektromotors von einer Elektronik gesteuert wird, und wobei das Pumpenaggregat Mittel zur Modulation des in den Statorwicklungen durch die Bestromung erzeugten Erregerstroms derart aufweist, dass ein vorbestimmter Sollwert einer Kenngröße des Erregerstroms um einen Zufallswert verändert wird. Mittels eines derartigen Pumpenaggregates kann das vorgeschriebene erfindungsgemäße Verfahren unter Ausnutzung jeglicher beschriebener Vorteile eingesetzt werden, wobei durch das Mittel zur Modulierung des Erregerstroms erreicht wird, dass das bei zumindest einer Frequenz vorhandene Intensitätsmaximum im Frequenzspektrum des Schallsignals derart reduziert wird, dass seine spektrale Energie auf die Seitenbänder der Frequenz verteilt wird. Die störenden tonalen Anteile im Frequenzspektrum werden hierdurch wirkungsvoll gefiltert. Vorteilhafterweise kann dadurch erreicht werden, dass Vibrationen des Pumpenaggregates gedämpft werden, da der mechanischen Anregung von Bauteilen entgegengewirkt wird.

Weitere Vorteile und Merkmale der Erfindung können der nachfolgenden Detailbeschreibung eines Ausführungsbeispiels sowie den Figuren entnommen werden.

Es zeigen:
Figur 1: Schematische Darstellung der Motoransteuerung bei einem EC-Motor mit Pulsweitenmodulation nach dem Stand der Technik
Figur 2: Vereinfachtes Spektrum der Geräuschemission eines Pumpenaggregates ohne Modulation des Erregerstroms
Figur 3: Schematische Darstellung einer modifizierten Motoransteuerung mit stochastischer Phasenmodulation
Figur 4: Vereinfachtes Spektrum der Geräuschemission des Pumpenaggregates mit stochastischer Phasenmodulation

Beispielhaft wird für die Beschreibung der Funktionsweise des erfindungsgemäßen Verfahrens ein elektronisch kommutierter Motor 1 (EC-Motor) verwendet, bei dem ein permanentmagnetischer Rotor durch die Bestromung konzentrisch im Stator positionierter Spulen in Rotation versetzt wird. Durch die zyklische Bestromung der Statorspulen erzeugen diese innerhalb der Bohrung des EC-Motors 1 ein sich drehendes, den permanentmagnetischen Rotor durchsetzendes Statorfeld, welches mit dem Magnetfeld der Permanentmagnete des Rotors interagiert, eine magnetische Kraft auf den Rotor ausübt und diesen damit in Drehung versetzt.

Üblicherweise werden derartige EC-Motoren 1 mittels einer Elektronik 2, 3, 4, 5 durch Pulsweitenmodulation betrieben, mittels derer der Elektromotor 1 aus einem Spannungszwischenkreis gespeist wird. Die Elektronik umfasst dabei eine Leistungselektronik 2, die mittels Pulsweitenmodulation gesteuert wird. Das Anlegen einer pulsweitenmodulierten Spannung an die Spulen erzeugt in diesen jeweils einen Erregerstrom, dieser wiederum das magnetische Statorfeld, das im Bereich einer Statorspule seinen Nordpol und im Bereich der gegenüberliegenden Statorspule seinen Südpol ausbildet. Das Pulsweitenmodulationssignal, mit dem die anderen Spulen bestromt werden, ist um einen Winkel phasenverschoben, der sich aus dem Verhältnis von 360° zur Polpaarzahl 2p ergibt. Weist der EC-Motor beispielsweise eine Polpaarzahl 2p=3 auf, so ist die Phasenverschiebung des eingeprägten Stroms zweier benachbarter Spulen um 120° phasenverschoben. Bei entsprechender Bestromung aller Statorspulen dreht das Statorfeld daher in der Bohrung des Elektromotors 1.

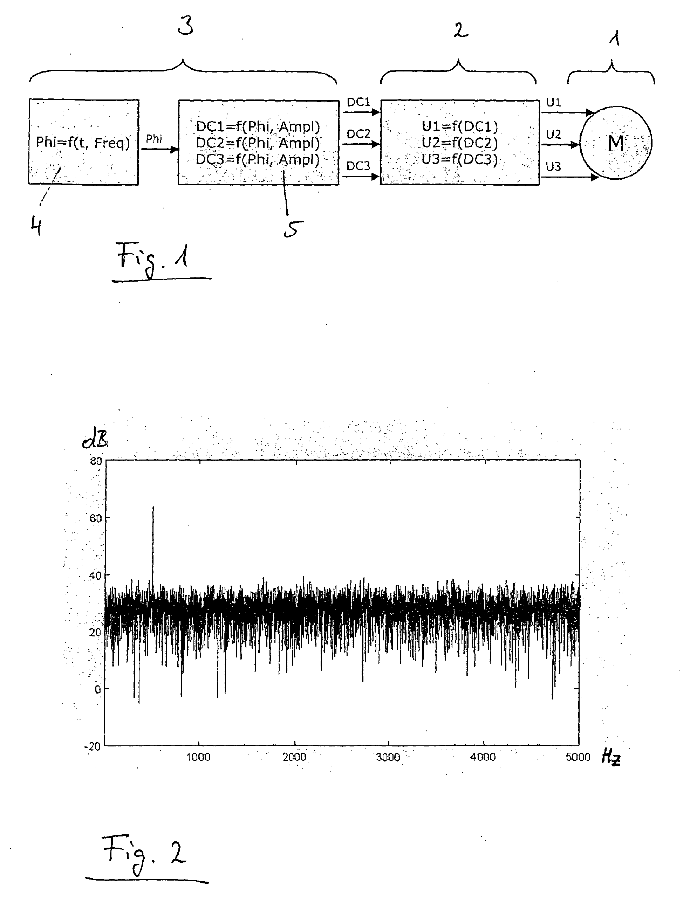

Figur 1 zeigt ein vereinfachtes Blockdiagramm für die Ansteuerung eines Elektromotors 1 mittels einer Leistungselektronik 2 und einer Steuerungselektronik 3 durch Pulweitenmodulation gemäß dem Stand der Technik. Der Elektromotor 1 ist hierbei ein elektronisch kommutierter Motor, für dessen zyklische Bestromung der Statorspulen es notwendig ist, die Position des Rotors, d. h. den Rotorwinkel Phi zu kennen, da es von dem Rotorwinkel abhängt, welche Statorspule als nächstes zu bestromen ist.

Die Ermittlung des Rotorwinkels kann auf unterschiedliche Art erfolgen. Beispielsweise kann innerhalb des Stators ein Hallsensor angeordnet sein, aus dessen Messsignal die Lage des Rotormagnetfeldes ermittelt und daraus wiederum der Rotorwinkel Phi bestimmt werden kann. Alternativ kann der Rotorwinkel Phi auch elektronisch durch die in den Statorwicklungen rückinduzierte Kraft (Back-EMF) erfolgen. Die Errechnung des aktuellen Rotorwinkels, der im Übrigen abhängig von der Zeit t und der Frequenz Freq ist, erfolgt in einer Drehwinkelbestimmungseinrichtung 4, die Bestandteil einer Motorsteuerungselektronik 3 ist. Ist der Rotorwinkel für den aktuellen Zeitpunkt t bei einer bestimmten Drehzahlfrequenz Freq des Motors ermittelt, wird dieser einer Einrichtung 5 zur Erzeugung pulsweitenmodulierter Spannungssignale DC1, DC2 und DC3 für die Leistungselektronik 2 übergeben. Die pulsweitenmodulierten Signale DC1, DC2 und DC3 mit denen Leistungshalbschalter der Leistungselektronik 2 angesteuert und geschaltet werden, bestimmen im Wesentlichen den in den Spulen erzeugten Erregerstrom. Sie sind zunächst abhängig von dem Rotorwinkel Phi, wobei die Phase des Pulsweitenmodulationssignals DC2 für Phase 2 gegenüber der Phase von DC1 um 120°, gegenüber der Phase von DC3 um -120° phasenverschoben ist. Durch eine geeignete Wahl der Pulsweiten der Modulationssignale DC1, DC2 und DC3 kann an die einer Phase zugeordneten Statorspulen des Elektromotors 1 jeweils eine mittlere Spannung zwischen 0 und der Zwischenkreisspannung angelegt werden. Dabei ist die mittlere Spannung umso höher, je breiter die Pulsweiten sind. Je höher die mittlere Spannung an den Statorspulen ist, desto größer bildet sich die Amplitude des Erregerstroms aus. Es ist dabei von der Lastsituation des EC-Motors 1 abhängig, wie groß die Amplitude des Erregerstroms werden muss, um der Lastsituation gerecht zu werden. In Abhängigkeit der Lastsituation kann der Pulsweitenmodulationseinheit 5 daher die notwendige Amplitude Ampl vorgegeben werden. Mit dem aktuell errechneten Drehwinkel Phi des Rotors und der Amplitude Ampl als Vorgabe, die im übrigen auch zu der Amplitude des Kraftvektors des Statorfeldes proportional ist, können von der Pulweiterimodulationseinheit 5 die pulsweitenmodulierten Signale DC1, DC2 und DC3 erzeugt werden.

Die pulsweitenmodulierten Signale DC1, DC2 und DC3 werden anschließend der Leistungselektronik 2 zugeführt, welche mit dem Spannungszwischenkreis verbundene Halbleiterschalter umfasst. Durch die Modulationssignale werden die Halbleiterschalter entsprechend für jede Phase des Elektromotors 1 geschaltet, so dass die erste Phase mit einer Spannung U1, die zweite Phase mit einer Spannung U2 und die dritte Phase mit einer Spannung U3 beaufschlagt wird. Diese Spannungen erzeugen wiederum in den Statorspulen Erregerstöme, aufgrund derer sich wiederum das magnetische Statorfeld ausbildet.

Das Spektrum der Geräuschemission eines in ein Heizsystem integrierten Pumpenaggregates besteht aus einem Rauschanteil und einer Summe von Einzeltönen, die als "Peaks" bezeichnet werden. Diese Peaks entstehen insbesondere bei der Drehzahlfrequenz und deren Vielfachen. Psychoakustisch wirken sich meist diese tonalen Komponenten störender aus als das breitbandige Rauschen.

Figur 2 veranschaulicht ein vereinfachtes Spektrum der Geräuschemission eines Pumpenaggregates, bestehend aus Rauschen und einer tonalen Komponente, d. h. einem Peak bei ca. 500 Hertz mit ca. 63 dB. In Figur 2 ist auf der Abszisse die Frequenz linear aufgetragen, die Ordinate zeigt die spektrale Leistungsdichte in dB.

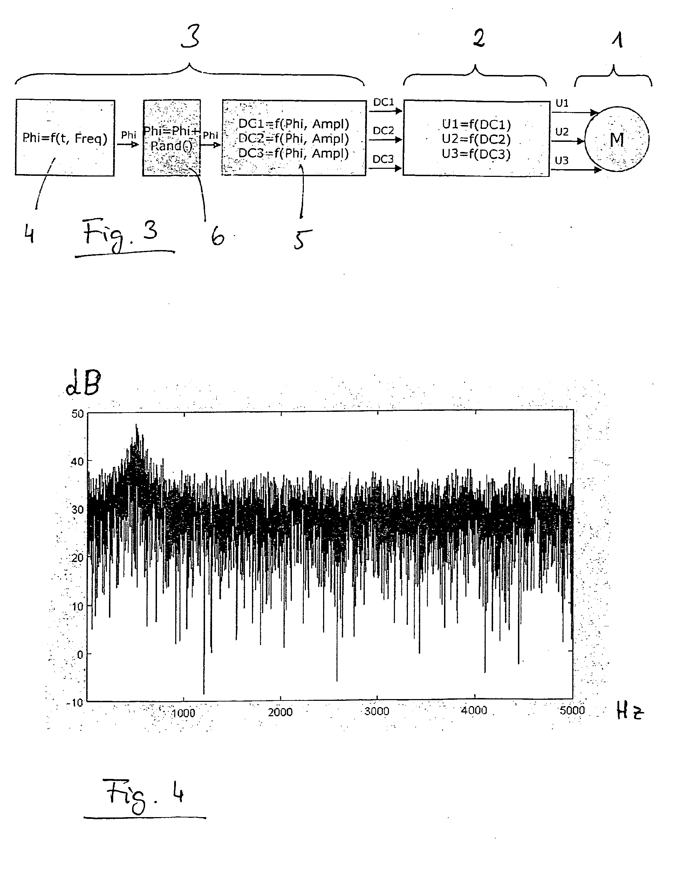

Durch die Anwendung des erfindungsgemäßen Verfahrens wird der Peak im Spektrum verbreitert und in seinem Pegel herabgesetzt. Die Schallenergie, die vorher in diesem Peak konzentriert gewesen ist, wird auf ein breiteres Frequenzband verteilt. Dies ist in Figur 4 dargestellt. Das menschliche Ohr empfindet das Geräusch nun als weniger störend. Im Idealfall ist es nicht mehr vom bestehenden Grundrauschen unterscheidbar.

Figur 3 zeigt beispielhaft in einem Blockdiagramm die einzelnen Schritte zur Durchführung des erfindungsgemäßen Verfahrens anhand des Beispiels einer Phasenmodulation. Der Drehwinkelbestimmungseinrichtung 4 ist eine Modulationseinrichtung 6 nachgeordnet, die zu dem Winkel Phi, der zunächst den Sollwert der Phase des Erregerstroms darstellt, einen Zufallswert zufügt. Dieser Zufallswert kann bis zu plus oder minus 4% des Winkels Phi betragen, so dass der neue an die Pulsweitenmodulationseinrichtung 5 übergebene Phasensollwert innerhalb eines Bereichs liegt, der nach unten durch den Wert von 96% des ursprünglichen Sollwertes und nach oben durch den Wert 104% des ursprünglichen Sollwertes begrenzt ist. Der neue Sollwert weicht damit maximal +/- 4% vom ursprünglichen Sollwert für den Phasenwinkel Phi ab. Im Übrigen entspricht das Motoransteuerungsverfahren demjenigen gemäß Stand der Technik.

Die Modulationseinheit 6 verändert jedoch den Zufallswert ohne jegliche Gesetzmäßigkeit ständig, insbesondere nach jedem Bestromungszyklus, so dass die pulsweitenmodulierten Signale DC1, DC2 und DC3, die Phasenspannungen U1, U2 und U3, die Erregerströme in den Statorwicklungen und letztlich auch das magnetische Statorfeld moduliert werden, was wiederum eine ständige Veränderung der Anregung der mechanischen Komponenten des Pumpenaggregates zur Folge hat, wodurch eine gezielte Anregung einer oder einzelner mechanischer Resonanzfrequenzen durch Verlagerung der Anregung auf andere Frequenzen verringert wird. Im Endergebnis hat das eine Reduzierung des Intensitätsmaximums im Frequenzspektrum bei der Resonanzfrequenz/ Eigenfrequenz zur Folge, so dass der störende tonale Anteil im Frequenzspektrum herausgefiltert wird.

Die erfolgreiche Anwendung des erfindungsgemäßen Verfahrens ist in Figur 4 dargestellt. Diese zeigt, dass durch eine stochastische Phasenmodulation von 4% des Drehwinkels der Peak auf ca. 47 dB reduziert wird.

Technisch wird die Verbreiterung der Peaks folglich durch eine gezielte stochastische Modulation der elektrischen Signale erreicht, welche den Motor ansteuern. Bei einer normalen Motoransteuerung werden die Statorwicklungen dagegen in einer Weise angeregt, dass der resultierende magnetische Kraftvektor des Statorfeldes gleichmäßig im Kreis umläuft. Bei der vorliegenden Erfindung wird die Ansteuerung des Stators derart verändert, dass der umlaufende Kraftvektor in seiner Phase, Frequenz und/oder in seiner Amplitude stochastisch moduliert wird.

Besonders leicht lässt sich die Erfindung in Systemen implementieren, bei denen der Motor über eine von einem Mikrocontroller gesteuerte Leistungselektronik angesteuert wird. Hierbei kann auf einfache Weise die Motoransteuerung, die als Software in dem Mikrocontroller hinterlegt ist, derart geändert werden, dass bei der Berechnung des aktuellen Motordrehwinkels auf den errechneten Wert ein Zufallswert addiert wird, so dass eine stochastische Phasenmodulation gemäß Figur 3 realisiert wird. Alternativ kann der Algorithmus auch um eine zufallsgesteuerte Frequenzänderung erweitert werden, so dass sich eine stochastische Frequenzmodulation ergibt. Letztendlich kann alternativ oder in Kombination auch ein Zufallswert auf die errechnete Amplitude addiert werden, so dass eine stochastische Amplitudenmodulation erreicht wird.

## Patentansprüche

1. Verfahren zur Geräuschreduzierung eines Pumpenaggregats umfassend eine Pumpe und einen diese antreibenden Elektromotor (1) mit Statorwicklungen, wobei das Pumpenaggregat ein Schallsignal mit einem Frequenzspektrum abstrahlt, das im Betrieb bei zumindest einer Frequenz ein Intensitätsmaximum aufweist, und wobei die Bestromung des Elektromotors (1) von einer Elektronik (2, 3, 4, 5) gesteuert wird, **dadurch gekennzeichnet, dass** der durch die Bestromung in den Statorwicklungen erzeugte Erregerstrom derart moduliert wird, dass ein vorbestimmter Sollwert einer Kenngröße des Erregerstroms um einen Zufallswert verändert wird.

2. Verfahren nach Anspruch 1, **dadurch gekennzeichnet, dass** die Kenngröße die Phase des Erregerstroms ist und eine Phasenmodulation durchgeführt wird.

3. Verfahren nach Anspruch 1 oder 2, **dadurch gekennzeichnet, dass** die Kenngröße die Frequenz des Erregerstroms ist und eine Frequenzmodulation durchgeführt wird.

4. Verfahren nach Anspruch 1, 2 oder 3, **dadurch gekennzeichnet, dass** die Kenngröße die Amplitude des Erregerstroms ist und eine Amplitudenmodulation durchgeführt wird.

5. Verfahren nach einem der vorherigen Ansprüche, **dadurch gekennzeichnet, dass** der Zufallswert zu dem Sollwert addiert wird.

6. Verfahren nach einem der vorherigen Ansprüche, **dadurch gekennzeichnet, dass** die Modulation des Erregerstroms nur dann erfolgt, wenn das Intensitätsmaximum einen vorgebbaren Maximalwert erreicht oder überschreitet.

7. Verfahren nach einem der vorherigen Ansprüche, **dadurch gekennzeichnet, dass** der Sollwert innerhalb eines vorgebbaren Bereichs variiert wird.

8. Verfahren nach Anspruch 7, **dadurch gekennzeichnet, dass** der Bereich durch plus/minus zehn Prozent, insbesondere durch plus/minus vier Prozent des Sollwerts um den Sollwert gebildet ist.

9. Verfahren nach einem der vorherigen Ansprüche, **dadurch gekennzeichnet, dass** der Zufallswert ständig, insbesondere nach jedem oder jedem zweiten Bestromungszyklus, geändert wird.

10. Verfahren nach einem der vorherigen Ansprüche, **dadurch gekennzeichnet, dass** der Elektromotor (1) ein mehrphasiger, insbesondere dreiphasiger Elektromotor (1) ist, und der Erregerstrom jeder Phase unabhängig von den Erregerströmen der übrigen Phasen moduliert wird.

11. Verfahren nach einem der vorherigen Ansprüche, **dadurch gekennzeichnet, dass** der Elektromotor (1) ein elektronisch kommutierter Elektromotor (1) ist und die Elektronik eine Leistungselektronik (2) und einer Steuerungselektronik (3) aufweist, die die Leistungselektronik (2) im Betrieb mit einem pulsweitenmodulierten Signal (DC1, DC2, DC3) beaufschlagt, wobei die Steuerungselektronik (3) das pulsweitenmodulierte Signal (DC1, DC2, DC3) in der Frequenz und/ oder in der Phase derart moduliert, dass ein vorbestimmter Sollwert der Phase, Amplitude und/ oder der Frequenz um den Zufallswert verändert wird.

12. Verfahren nach einem der vorherigen Ansprüche, **dadurch gekennzeichnet, dass** die Pumpe eine Kreiselpumpe, insbesondere eine Heizungspumpe ist.

13. Pumpenaggregat umfassend eine Pumpe und einen diese antreibenden Elektromotor (1) mit Statorwicklungen, wobei das Pumpenaggregat im Betrieb ein Schallsignal mit einem Frequenzspektrum abstrahlt, das bei zumindest einer Frequenz ein Intensitätsmaximum aufweist, und wobei die Bestromung des Elektromotors von einer Elektronik (2, 3, 4, 5) gesteuert wird, **gekennzeichnet durch** Mittel (6) zur Modulation des in den Statorwicklungen **durch** die Bestromung erzeugten Erregerstroms derart, dass ein vorbestimmter Sollwert einer Kenngröße des Erregerstroms um einen Zufallswert verändert wird.
